(19) Europäisches Patentamt
European Patent Office
Office européen des brevets

(11) **EP 2 818 375 B1**

(12) **EUROPEAN PATENT SPECIFICATION**

(45) Date of publication and mention
of the grant of the patent:
**25.09.2019 Bulletin 2019/39**

(51) Int Cl.:
*B60W 20/00* (2016.01)     *B60K 6/48* (2007.10)
*B60K 6/547* (2007.10)     *B60W 10/02* (2006.01)
*B60W 10/06* (2006.01)     *B60W 10/08* (2006.01)
*B60W 20/40* (2016.01)

(21) Application number: **12869575.6**

(22) Date of filing: **23.02.2012**

(86) International application number:
**PCT/JP2012/054420**

(87) International publication number:
**WO 2013/125009 (29.08.2013 Gazette 2013/35)**

(54) **START CONTROL DEVICE FOR HYBRID VEHICLE**

STARTSTEUERUNGSVORRICHTUNG FÜR EIN HYBRIDFAHRZEUG

DISPOSITIF DE COMMANDE DE DÉMARRAGE POUR VÉHICULE HYBRIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.12.2014 Bulletin 2015/01**

(73) Proprietor: **Toyota Jidosha Kabushiki Kaisha
Toyota-shi, Aichi 471-8571 (JP)**

(72) Inventors:
• **TANAKA, Takaaki
Toyota-shi,
Aichi 471-8571 (JP)**
• **TABATA, Mitsuhiro
Toyota-shi,
Aichi 471-8571 (JP)**
• **TAKAHASHI, Tomoya
Toyota-shi,
Aichi 471-8571 (JP)**

(74) Representative: **D Young & Co LLP
120 Holborn
London EC1N 2DY (GB)**

(56) References cited:
EP-A2- 1 177 930     DE-A1- 2 943 554
JP-A- 2002 262 406     JP-A- 2004 040 872
JP-A- 2004 155 388     JP-A- 2005 522 619
JP-A- 2009 292 419     US-A- 6 116 363

EP 2 818 375 B1

## Description

Technical Field

The present invention relates to a start control apparatus applied to a hybrid vehicle having an internal combustion engine and an electric motor as power sources, where powers of the power sources are transmitted to an input shaft of a manual transmission via a common manual-type clutch.

Background Art

There is known a hybrid vehicle having an internal combustion engine and an electric motor as power sources, where powers of the power sources are transmitted to drive wheels via a manual transmission. For example, there is known a hybrid vehicle where a rotor shaft of the electric motor is connected to an input shaft of the manual transmission via a manual-type clutch which is operated by a clutch pedal, and an output shaft of the internal combustion engine is connected to the rotor shaft via an automatic clutch (see Patent Literature 1). In addition, there are Patent Literatures 2, 3 as prior art references in relation to the present invention.

Citation List

Patent Literature

    Patent Literature 1: JP 2011-183847 A
    Patent Literature 2: JP 2011-037409 A
    Patent Literature 3: JP 2001-352605 A

US 6,116,363 relates to a fuel consumption control for charge depletion hybrid electric vehicles and does not disclose at least a control device that, when the vehicle is made to start off by the internal combustion engine, switches gradually the state of the second clutch from the release state, to an engaged state where power is transmitted between the internal combustion engine and the rotating member while increasing gradually output power of the internal combustion engine after the predetermined start conditions are satisfied.

Summary of Invention

Technical Problem

In the vehicle of the Patent Literature 1, when the vehicle is driven by the electric motor, the automatic clutch is released and the internal combustion engine is stopped. In this case, it is possible to make the vehicle start off without occurring an engine stall even though the manual-type clutch is engaged. Thereby, in this case, it is not necessary that the driver operates the manual-type clutch, when the vehicle starts off. On the other hand, in the vehicle of the Patent Literature 1, the automatic clutch is engaged when the vehicle is driven by the internal combustion engine. In this case, it is necessary that the driver operates the manual-type clutch in order to avoid the engine stall, when the vehicle starts off. As described above, in the vehicle of the Patent Literature 1, there is a possibility that the driver needs to perform different clutch operations with each other depending on a case that the vehicle starts off using the internal combustion engine or a case that the vehicle starts off using the electric motor.

In view of the foregoing, one object of the present invention is to provide a start control apparatus for a hybrid vehicle capable of making a vehicle start off by same operations regardless of the kind of the power source at the start of the vehicle, and capable of suppressing an occurrence of an engine stall.

Solution to Problem

Aspects of the invention are defined in the accompanying claims.

A start control apparatus of the present invention is applied to a hybrid vehicle, the hybrid vehicle including: a manual transmission having plural shift stages where different gear ratios from each other are set respectively, the shift stages being changed from each other in response to an operation of a shift lever; a rotating member being connected with an input shaft of the manual transmission via a first clutch to be actuated in response to a stepping operation of a clutch pedal; an electric motor being provided so as to be allowed to transmit power to the rotating member; and an internal combustion engine being connected with the rotating member so as to be allowed to transmit power via a second clutch, wherein the start control apparatus includes a control device which controls operations of the electric motor, the internal combustion engine, and the second clutch, the control device makes the vehicle start off by using power of at least any one of the internal combustion engine and the electric motor when predetermined start conditions are satisfied, and the start conditions include that: the second clutch is in a release state where power transmission between the internal combustion engine and the rotating member is shut off; the first clutch is in an engaged state where power is transmitted between the rotating member and the input shaft of the manual transmission; and an accelerator opening of the vehicle is greater than zero.

In the start control apparatus of the present invention, the start conditions include that: the first clutch is in the engaged state; and the accelerator opening is greater than zero. Thereby, it is unnecessary for the driver to operate the clutch pedal so that the power of the internal combustion engine or the electric motor is transmitted to the input shaft of the manual transmission gradually, at a start of the vehicle. And, these start conditions are the same regardless of the kind of the power source which is used at the start of the vehicle. Thereby, according to the start control apparatus of the present invention, it is possible for the driver to make the vehicle to start off by same operations regardless of the kind of the power source at the start of the vehicle. Furthermore, the start conditions include that the second clutch is in the release state. Thereby, the internal combustion engine is separated from the manual transmission when the start conditions are satisfied. Accordingly, it is possible to suppress an engine stall.

The second clutch is a friction clutch, and the control device, when the vehicle is made to start off by the internal combustion engine, switches gradually the state of the second clutch from the release state, to an engaged state where power is transmitted between the internal combustion engine and the rotating member while increasing gradually output power of the internal combustion engine, after the predetermined start conditions are satisfied. By controlling the operations of the internal combustion engine and the second clutch in this manner, it is possible to make the vehicle start off using the internal combustion engine while avoiding an occurrence of the engine stall, even though the first clutch is kept in the engaged state.

In one example of the start control apparatus of the present invention, the first clutch may be a friction clutch which is allowed to switch a state of the first clutch to either: a half clutch engaged state where power is transmitted between the rotating member and the input shaft of the manual transmission while the rotating member and the input shaft of the manual transmission rotate at different rotating speed from each other; or a fully engaged state where the rotating member and the input shaft of the manual transmission rotate integrally with each other, and the control device may control the operations of the electric motor, the internal combustion engine, and the second clutch so that a drive wheel of the vehicle is not driven by the internal combustion engine or the electric motor, when the accelerator opening of the vehicle is zero even though the first clutch is in the half clutch engaged state. As well known, in the friction clutch, the above described half clutch engaged state and fully engaged state exist as the engaged state. In this example, the vehicle does not start off when the accelerator opening is zero even though the first clutch is in the half clutch engaged state. Thereby, it is possible to make the driver notice that it is necessary to step on the accelerator pedal for starting the vehicle.

In one example of the start control apparatus of the present invention, the control device may switch a state of the second clutch to the release state, in a case that a state of the manual transmission is changed to a state of any one of the shift stages from a neutral state, when the vehicle is parked. According to this example, it is possible to prevent the drive wheel of the vehicle and the internal combustion engine from connecting with each other so as to be allowed to transmit power, when the vehicle is parked. Thereby, it is possible to prevent the engine stall even though the internal combustion engine is running when the vehicle is parked.

In one example of the start control apparatus of the present invention, the first clutch may be a friction clutch which is allowed to switch a state of the first clutch to either: a half clutch engaged state where power is transmitted between the rotating member and the input shaft of the manual transmission while the rotating member and the input shaft of the manual transmission rotate at different rotating speed from each other; or a fully engaged state where the rotating member and the input shaft of the manual transmission rotate integrally with each other, and the control device may switch a state of the second clutch to the release state, in a case that the clutch pedal is stepped on to switch a state of the first clutch to the half clutch engaged state from the fully engaged state, when the vehicle is parked. As well known, in a case that the clutch pedal is stepped on when the vehicle is parked, it is possible to expect that the state of the manual transmission is changed to a state of any one of the shift stages by operating the shift lever. Thereby, according to this example, it is possible to separate the input shaft of the manual transmission and the internal combustion engine from each other before the state of the manual transmission is switched to a state of any one of the shift stages. As the result, it is possible to prevent the drive wheel of the vehicle and the internal combustion engine from connecting with each other so as to be allowed to transmit power, when the vehicle is parked. Thereby, it is possible to prevent the engine stall even though the internal combustion engine is running when the vehicle is parked.

In one example of the start control apparatus of the present invention, the first clutch may be a friction clutch which is allowed to switch a state of the first clutch to either: a half clutch engaged state where power is transmitted between the rotating member and the input shaft of the manual transmission while the rotating member and the input shaft of the manual transmission rotate at different rotating speed from each other; or a fully engaged state where the rotating member and the input shaft of the manual transmission rotate integrally with each other, and the control device may switch a state of the second clutch to the release state, in a case that the clutch pedal is operated to switch a state of the first clutch to the half clutch engaged state from a release state where power transmission between the rotating member and the input shaft of the manual transmission is shut off, when the vehicle is parked. According to this example, it is possible to switch the second clutch to the release state before the first clutch is switched to the fully engaged state. Thereby, it is possible to separate the internal combustion engine and the drive wheel from each other before the internal combustion engine and the drive wheel connect fully with each other. Accordingly, it is possible to prevent the engine stall even though the internal combustion engine is running when the vehicle is parked.

Brief Description of Drawings

Fig. 1 is a schematic diagram showing a vehicle where a start control apparatus is incorporated.
Fig. 2 is a flowchart showing a start preparation routine executed by a control apparatus.
Fig. 3 is a flowchart showing a start control routine executed by the control apparatus.
Fig. 4 is a flowchart showing another example of the start preparation control.
Fig. 5 is a flowchart showing further another example of the start preparation control.

Description

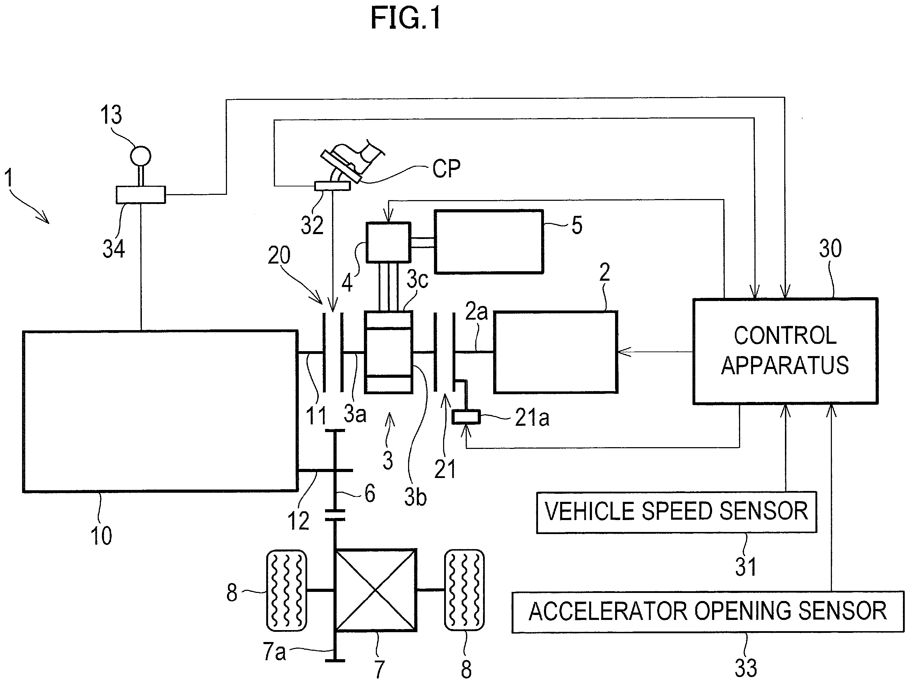

Fig. 1 schematically shows a vehicle where a start control apparatus is incorporated. The vehicle 1 includes an internal combustion engine (hereinafter, referred to as an engine) 2 and a motor generator (hereinafter, referred to as an MG) 3 as an electric motor, as power sources. That is, the vehicle 1 is configured as a hybrid vehicle. The engine 2 is a well known spark ignition type internal combustion engine which has plural cylinders. The MG 3 is a well known motor generator which is mounted on the hybrid vehicle to function as an electric motor and a generator. The MG 3 includes a rotor 3b which rotates integrally with a rotor shaft 3a and a stator 3c which is arranged on an outer circumference of the rotor 3b coaxially and is fixed to a case (not shown). The MG 3 is connected electrically to a battery 5 via an inverter 4.

A manual transmission (hereinafter, referred to as a transmission) 10 providing one-five forward shift stages is mounted on the vehicle 1. The transmission 10 includes an input shaft 11 and an output shaft 12. Gear pairs (not shown) which correspond to first gear to fifth gear are provided between the input shaft 11 and the output shaft 12. Gear ratios are set to the gear pairs respectively, so that the gear ratios are different from each other. The gear ratios are set so as to get smaller in the order of the gear pair of the first gear, the gear pair of the second gear, the gear pair of the third gear, the gear pair of the fourth gear, and the gear pair of the fifth gear. The transmission 10 is configured so as to establish a transmission of rotation selectively by any one of the gear pairs. The transmission 10 includes a shift lever 13 which is operated by a driver. In the transmission 10, the gear pairs which are used for the transmission of rotation between the input shaft 11 and the output shaft 12 are changed by the shift lever 13. Furthermore, the transmission 10 is configured so as to be allowed to change its state into a neutral state where the transmission of rotation between the input shaft 11 and the output shaft 12 is shut off, when the shift lever 13 is moved to a neutral position. A structure of the transmission 10 is the same as a structure of a well-known manual transmission which is mounted on a vehicle. Thereby, a detailed description of the structure of the transmission 10 will be omitted.

As shown in this figure, the rotor shaft 3a of the MG 3 is connected with the input shaft 11 of the transmission 10 via a first clutch 20. The first clutch 20 is a friction clutch. The first clutch 20 is configured so as to be allowed to switch its state between a fully engaged state where the input shaft 11 and the rotor shaft 3a rotate integrally with each other and a release state where the input shaft 11 and the rotor shaft 3a are separated from each other. Furthermore, the first clutch 20 is allowed to switch its state to a half clutch engaged state (hereinafter, referred to as a half clutch) where power is transmitted between the rotor shaft 3a and the input shaft 11 while the rotor shaft 3a and the input shaft 11 rotate at different rotating speeds from each other. The vehicle 1 is provided with a clutch pedal CP which is operated by the driver. The first clutch 20 is operated by the clutch pedal CP. That is, the first clutch 20 is a manual-type clutch. As described above, in the first clutch 20, the power is transmitted between the rotor shaft 3a and the input shaft 11 in both states of the fully engaged state and the half clutch. Thereby, an engaged state of the first clutch of the present invention includes the fully engaged state and the half clutch.

An output shaft 2a of the engine 2 is connected with the rotor shaft 3a of the MG 3 via a second clutch 21. The second clutch 21 is a friction clutch. The second clutch 21 is configured so as to be allowed to switch its state between a fully engaged state where the output shaft 2a and the rotor shaft 3a rotate integrally and a release state where the output shaft 2a and the rotor shaft 3a are separated from each other. Furthermore, the second clutch 21 is also allowed to switch its state to a state of a half clutch where power is transmitted between the output shaft 2a and the rotor shaft 3a while the output shaft 2a and the rotor shaft 3a rotate at different rotating speeds from each other. The second clutch 21 includes an actuator 21a for switching the states of the second clutch 21. By connecting the engine 2 in this manner, the rotor shaft 3a of the MG 3 corresponds to a rotating member of the present invention.

An output gear 6 is provided on the output shaft 12 of the transmission 10. The output gear 6 is engaged with a ring gear 7a of a differential mechanism 7. The differential mechanism 7 is a well known mechanism which distributes inputted power to the right and left drive wheels 8.

The operations of the engine 2, the MG 3, and the second clutch 21 are controlled by a control apparatus 30. Thereby, the control apparatus 30 corresponds to a control device of the present invention. The control apparatus 30 is configured as a computer unit including a microprocessor and peripheral devices, such as a RAM and a ROM, which are necessary for the operations of the microprocessor. The control apparatus 30 holds various control programs for driving the vehicle 1 appropriately. The control apparatus 30 controls control objects such as the engine 2 and the MG 3 by executing these programs. The control apparatus 30 controls the operation of the MG 3 by controlling the inverter 4. The control apparatus 30 is connected with various sensors for obtaining information with respect to the vehicle 1. The control apparatus 30 is connected with a vehicle speed sensor 31, a clutch pedal sensor 32, and an accelerator opening sensor 33, for example. The vehicle speed sensor 31 outputs a signal corresponding to speed of the vehicle 1 (the vehicle speed). The clutch pedal sensor 32 outputs a signal corresponding to an operation amount to the clutch pedal CP. The accelerator opening sensor 33 outputs a signal corresponding to an accelerator opening. Furthermore, the control apparatus 30 is also connected with a neutral sensor 34. The neutral sensor 34 outputs a signal corresponding to a state whether or not the shift lever 13 is on the neutral position. In addition, various sensors are further connected to the control apparatus 30, but they are omitted in the figure.

Controls which are executed by the control apparatus 30 will be described. The control apparatus 30 charges the battery 5, in a case that, when the vehicle 1 is parked, the transmission 10 is in the neutral state and the control apparatus 30 determines that a charge of the battery 5 is necessary. In this case, first, the control apparatus 30 controls the MG 3 so as to function as a power generator. Next, the control apparatus 30 operates the engine 2, and switches the state of the second clutch 21 to the fully engaged state. As a result, since the MG 3 is driven by the engine 2, a power generation is performed. And, the battery 5 is charged. In a case that the charge of the battery 5 is not necessary when the vehicle 1 is parked, the control apparatus 30 stops the engine 2 and the MG 3.

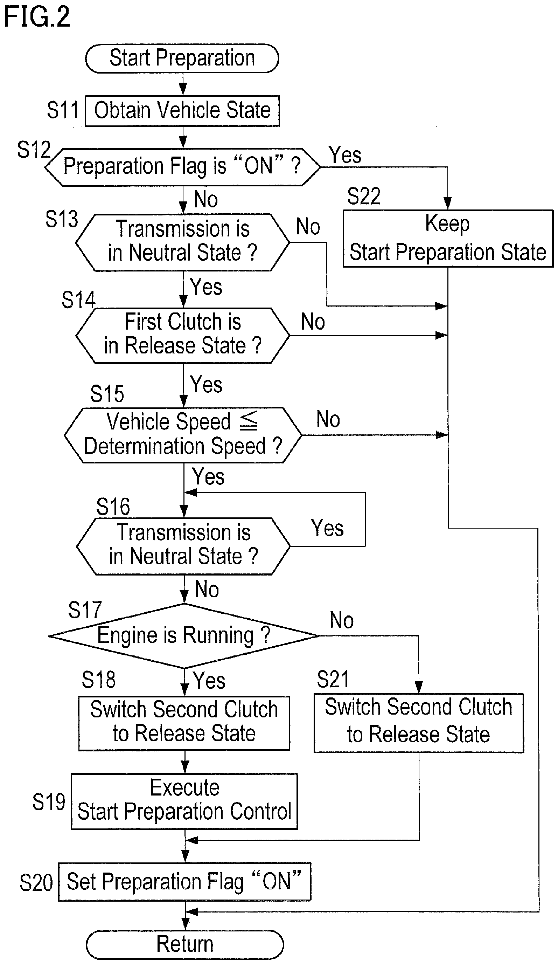

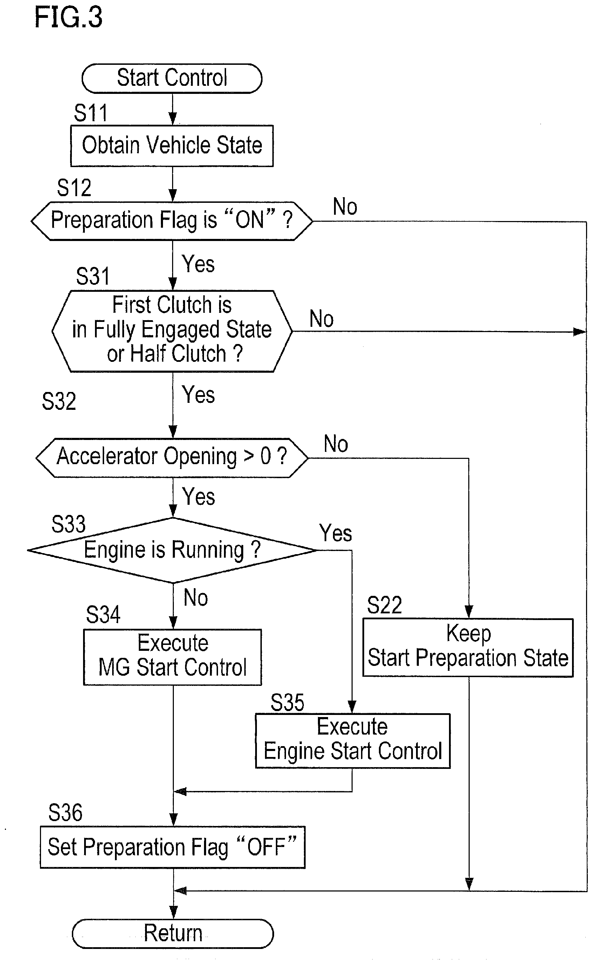

Furthermore, the control apparatus 30 makes the vehicle 1 start off in a case that the driver performs predetermined operations when the vehicle 1 is parked. Fig. 2 and Fig. 3 show routines which the control apparatus 30 executes for controlling a start of the vehicle 1. First, a start preparation routine of Fig. 2 will be described. The control apparatus 30 repeatedly executes this routine at predetermined intervals when the vehicle 1 is parked. Furthermore, the control apparatus 30 executes this routine in parallel to the other routines executed by the control apparatus 30.

In the routine of Fig. 2, the control apparatus 30 first obtains the state of the vehicle 1 in step S11. The control apparatus 30 obtains the vehicle speed, the state of the first clutch 20, the accelerator opening, and so on as the state of the vehicle 1. In the next step S12, the control apparatus 30 determines whether or not a state of a preparation flag is "ON". The preparation flag is a flag which indicates that the states of the engine 2, the MG 3, and the second clutch 21 are states where the vehicle 1 is made to start off.

When the control apparatus 30 determines that the state of the preparation flag is "OFF", the control apparatus 30 goes to step S13 and determines whether or not the transmission 10 is in the neutral state. The control apparatus 30 can make a determination based on the output signal of the neutral sensor 34, for example. When the control apparatus 30 determines that the transmission 10 is not in the neutral state, the control apparatus 30 ends the present routine. On the other hand, the control apparatus 30 determines that the transmission 10 is in the neutral state, the control apparatus 30 goes to step S14 and determines whether or not the first clutch 20 is in the release state. The control apparatus 30 can make a determination based on the output signal of the clutch pedal sensor 32, for example. When the control apparatus 30 determines that the first clutch 20 is not in the release state, the control apparatus 30 ends the present routine.

On the other hand, when the control apparatus 30 determines that the first clutch 20 is in the release state, the control apparatus 30 goes to step S15 and determines whether or not the vehicle speed is equal to or less than a predetermined determination speed. The determination speed is set as a criterion for determining whether or not it is necessary to execute a start control when the vehicle 1 is made to start off. Speed V which is calculated by a following equation (1) is set as the determination speed, for example.

$$V = Ni / Rg \cdot Tr \quad ---(1)$$

An "Ni" in the equation (1) indicates an idling rotating speed of the engine 2. An "Rg" indicates a total gear ratio which is obtained by multiplying a gear ratio between the output gear 6 and the ring gear 7a by the gear ratio of the gear pair of the first gear of the transmission 10. A "Tr" indicates radius of the drive wheel 8.

When the control apparatus 30 determines that the vehicle speed is greater than the determination speed, the control apparatus 30 ends the present routine. On the other hand, when the control apparatus 30 determines that the vehicle speed is equal to or less than the determination speed, the control apparatus 30 goes to step S16 and determines whether or not the transmission 10 is in the neutral state. When the control apparatus 30 determines that the transmission 10 is in the neutral state, the control apparatus 30 returns to the step S16. That is, this process is executed repeatedly until the state of the transmission 10 is changed to a state other than the neutral state by the driver. In order to transmit the rotation of the input shaft 11 to the output shaft 12, any one of the shift stages is necessary to be selected. Thereby, in this process, the control apparatus 30 determines whether or not any one of the shift stages has been selected through the operation to the shift lever 13. On the other hand, when the control apparatus 30 determines that the transmission 10 is in the state other than the neutral state, the control apparatus 30 goes to step S17 and determines whether or not the engine 2 is running. As described above, even though the vehicle 1 is parked, the engine 2 is operated when it is necessary to charge the battery 5. Thereby, in such case, the engine 2 is running.

When the control apparatus 30 determines that the engine 2 is running, the control apparatus 30 goes to step S18 and switches the state of the second clutch 21 to the release state. In the next step S19, the control apparatus 30 executes a start preparation control. In the start preparation control, the control apparatus 30 controls the engine 2 so as to be in an idling state. Furthermore, the control apparatus 30 control the rotating speed of the MG 3 so as to be 0 revolutions per minute (r. p. m.). In the next step S20, the control apparatus 30 switches the state of the preparation flag to "ON". Thereafter, the control apparatus 30 ends the present routine.

On the other hand, when the control apparatus 30 determines that the engine 2 is stopped, the control apparatus 30 goes to step S21 and switches the state of the second clutch 21 to the release state. In the next step S20, the control apparatus 30 switches the state of the preparation flag to "ON". Thereafter, the control apparatus 30 ends the present routine.

When the determination in the step S12 is affirmative, the control apparatus 30 goes to step S22 and keeps a start preparation state. That is, when the engine 2 is running, the control apparatus 30 controls the engine 2 in the idling state. Furthermore, the control apparatus 30 controls the rotating speed of the MG 3 to keep 0 r. p. m. And, the control apparatus 30 keeps the state of the second clutch 21 in the release state. On the other hand, when the engine 2 is stopped, the control apparatus 30 keeps the states of the engine 2 and the MG 3 in a stop state. Furthermore, the control apparatus 30 keeps the state of the second clutch 21 in the release state. Thereafter, the control apparatus 30 ends the present routine.

Next, a start control routine of Fig. 3 will be described. The control apparatus 30 repeatedly executes this control routine at predetermined intervals when the vehicle 1 is parked. In the Fig. 3, the same processes as those of the routine of Fig. 2 are denoted by the same reference numerals respectively, and descriptions thereof will be omitted.

In the control routine of Fig. 3, the control apparatus 30 first obtains the state of the vehicle 1 in step S11. In the next step S12, the control apparatus 30 determines whether or not the state of the preparation flag is "ON". When the control apparatus 30 determines that the state of the preparation flag is "OFF", the control apparatus 30 ends the present routine.

On the other hand, when the control apparatus 30 determines that the state of the preparation flag is "ON", the control apparatus 30 goes to step S31 and determines whether or not the state of the first clutch 20 is in the fully engaged state or the half clutch. As described above, when the state of the preparation flag is "ON", this process is executed. Thereby, at the moment when this process is executed, the state of the second clutch 21 has been already switched to the release state. Accordingly, even though the state of the first clutch 20 is switched to the fully engaged state or the half clutch, it is possible to prevent an engine stall. When the control apparatus 30 determines that the state of the first clutch 20 is neither the fully engaged state nor the half clutch, the control apparatus 30 ends the present control routine.

On the other hand, when the control apparatus 30 determines that the state of the first clutch 20 is the fully engaged state or the half clutch, the control apparatus 30 goes to step S32 and determines whether or not the accelerator opening is greater than zero, that is, an accelerator pedal has been stepped on. The control apparatus 30 can make a determination in reference to the output signal of the accelerator opening sensor 33, for example. When the control apparatus 30 determines that the accelerator opening is zero, the control apparatus 30 goes to step S22 and keeps the start preparation state. Thereafter, the control apparatus 30 ends the present control routine.

On the other hand, the control apparatus 30 determines that the accelerator opening is greater than zero, the control apparatus 30 goes to step S33 and determines whether or not the engine 2 is running. When the control apparatus 30 determines that the engine 2 is stopped, the control apparatus 30 goes to step S34 and executes an MG start control. In the MG start control, the control apparatus 30 controls the MG 3 so as to function as the electric motor. And, the control apparatus 30 makes the vehicle 1 start off by driving the drive wheels 8 by the MG 3.

On the other hand, the control apparatus 30 determines that the engine 2 is running, the control apparatus 30 goes to step S35 and executes an engine start control. In the engine start control, the control apparatus 30 switches the state of the second clutch 21 to the fully engaged state from the release state gradually while the output power of the engine 2 increases gradually, so that the engine stall is avoided. As the result, since the power of the engine 2 is transmitted to the transmission 10 gradually, the drive wheels 8 are driven by the engine 2. Thereby, the vehicle 1 starts off.

After making the vehicle 1 start off in the step S34 or the step S35, the control apparatus 30 goes to step S36 and switches the state of the preparation flag to "OFF". Thereafter, the control apparatus 30 ends the present control routine.

As described above, in the present invention, the vehicle 1 is made to start off in the following conditions: the transmission 10 is not in the neutral state; the second clutch 21 is in the release state; the first clutch 20 is in the fully engaged state or the half clutch; and the accelerator opening is greater than zero. In this case, the driver can make the vehicle 1 start off by: first, moving the shift lever 13 to a start shift stage such as the first gear or the second gear; next, releasing the stepping on the clutch pedal CP; and then stepping on the accelerator pedal. These operations which are performed by the driver are the same regardless of the kind of the power source at the start of the vehicle 1. That is, in the present invention, the driver can make the vehicle 1 start off by the same operation regardless of the kind of the power source at the start of the vehicle 1. Accordingly, it is possible to reduce a burden of the driver at the start of the vehicle 1. Furthermore, in the present invention, even though the first clutch 20 is in the half clutch, the vehicle does not start off when the accelerator opening is zero. Thereby, it is possible to make the driver notice that it is necessary to step on the accelerator pedal for making the vehicle 1 start off.

Furthermore, in the above described example, the state of the second clutch 21 is switched to the release state when the start shift stage is selected through the operation to the lever 13 and the state of the transmission 10 is changed to a state other than the neutral state. Thereby, it is possible to prevent the engine stall.

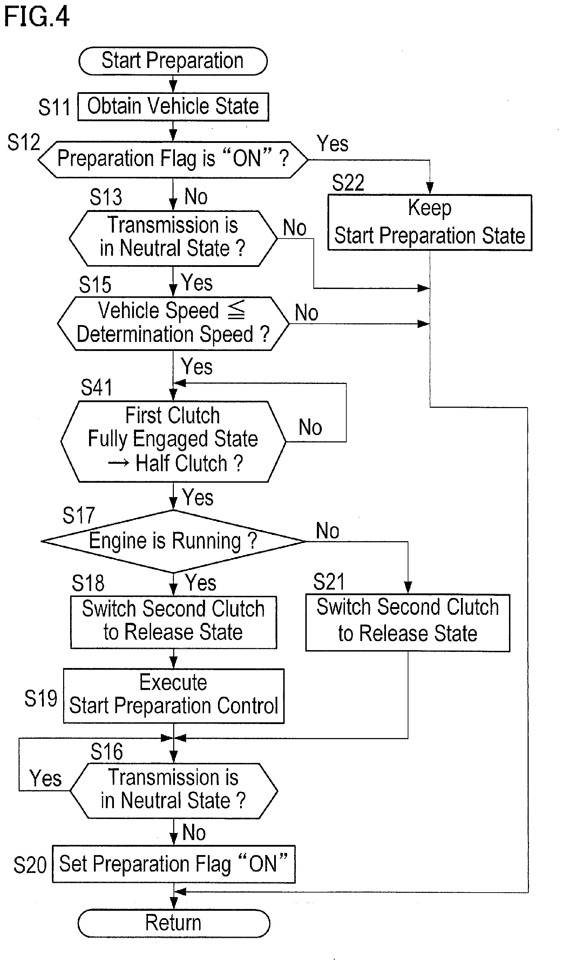

Fig. 4 shows other example of the start preparation routine of the present invention. In the Fig. 4, the same processes as those of the routine of Fig. 2 are denoted by the same reference numerals respectively, and descriptions thereof will be omitted. The control apparatus 30 repeatedly executes this routine at predetermined intervals when the vehicle 1 is parked. Furthermore, the control apparatus 30 executes this routine in parallel to the other routines executed by the control apparatus 30.

In the start preparation routine of Fig. 4, the control apparatus 30 proceeds with the processes in a similar manner to Fig. 2 until the step S13. In the step S13, when the control apparatus 30 determines that the transmission is in the neutral state, the control apparatus 30 goes to the step S15 and determines whether or not the vehicle speed is equal to or less than the determination speed. When the control apparatus 30 determines that the vehicle speed is greater than the determination speed, the control apparatus 30 ends the present routine. On the other hand, when the control apparatus 30 determines that the vehicle speed is equal to or less than the determination speed, the control apparatus 30 goes to step S41 and determines whether or not the state of the first clutch 20 has been switched to the half clutch from the fully engaged state. The control apparatus 30 can make a determination in reference to the output signal of the clutch pedal sensor 32, for example. When the control apparatus 30 determines that the state of the first clutch 20 has not been switched to the half clutch, the control apparatus 30 returns to the step S41. That is, this process is executed repeatedly until the state of the first clutch 20 is switched to the half clutch from the fully engaged state.

On the other hand, when the control apparatus 30 determines that the state of the first clutch 20 has got switched to the half clutch, the control apparatus 30 goes to the step S17 and determines whether or not the engine 2 is running. When the control apparatus 30 determines that the engine 2 is running, the control apparatus 30 executes the step S18 and the step S19. On the other hand, when the control apparatus 30 determines that the engine 2 is stopped, the control apparatus 30 executes the step S21.

After executing the step S18 and the step S19, or executing the step S21, the control apparatus 30 goes to the step S16 and determines whether or not the transmission 10 is in the neutral state. When the control apparatus 30 determines that the transmission 10 is in the neutral state, the control apparatus 30 returns to the step S16. On the other hand, when the control apparatus 30 determines that the transmission 10 is in a state other than the neutral state, the control apparatus 30 goes to the step S20 and switches the state of the preparation flag to "ON". Thereafter, the control apparatus 30 ends the present routine.

According to this start preparation routine, the state of the second clutch 21 is switched to the release state, when the state of the first clutch 20 is switched to the half clutch from the fully engaged state. When the state of the first clutch 20 is switched to the half clutch from the fully engaged state, it is possible to expect that the transmission 10 will be changed to the start shift stage such as the first gear from the neutral state by the driver. So, in such a case, the state of the second clutch 21 is switched to the release state. As the result, since it is possible to prevent the engine 2 and the transmission 10 from connecting with each other when the vehicle 1 is parked, it is possible to prevent the engine stall.

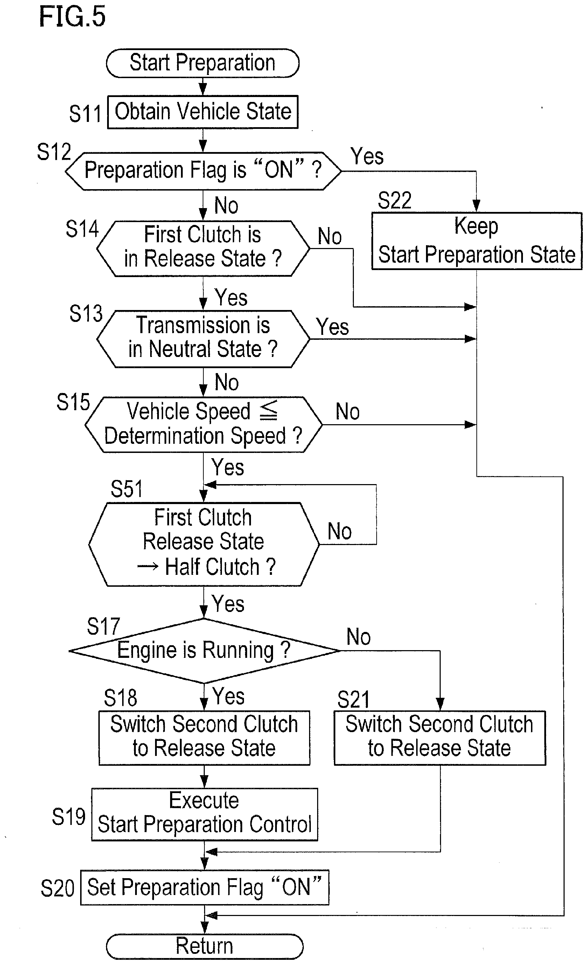

Fig. 5 shows further other example of the start preparation routine of the present invention. In the Fig. 5, the same processes as those of the routine of Fig. 2 are denoted by the same reference numerals respectively, and descriptions thereof will be omitted. The control apparatus 30 repeatedly executes this routine at predetermined intervals when the vehicle 1 is parked. Furthermore, the control apparatus 30 executes this routine in parallel to the other routines executed by the control apparatus 30.

In the start preparation routine of Fig. 5, the control apparatus 30 proceeds with the processes in a similar manner to Fig. 2 until the step S12. In the step S12, when the control apparatus 30 determines that the state of the preparation flag is "OFF", the control apparatus 30 goes to the step S14 and determines whether or not the first clutch 20 is in the release state. When the control apparatus 30 determines that the first clutch 20 is in the fully engaged state or the half clutch, the control apparatus 30 ends the present routine. On the other hand, when the control apparatus 30 determines that the first clutch 20 is in the release state, the control apparatus 30 goes to the step S13 and determines whether or not the transmission 10 is in the neutral state. When the control apparatus 30 determines that the transmission 10 is in the neutral state, the control apparatus 30 ends the present routine. On the other hand, when the control apparatus 30 determines that the transmission 10 is in a state other than the neutral state, the control apparatus 30 goes to the step S15 and determines whether or not the vehicle speed is equal to or less than the determination speed. When the control apparatus 30 determines that the vehicle speed is greater than the determination speed, the control apparatus 30 ends the present routine. On the other hand, when the control apparatus 30 determines that the vehicle speed is equal to or less than the determination speed, the control apparatus 30 goes to step S51 and determines whether or not the state of the first clutch 20 has been switched to the half clutch from the release state. The control apparatus 30 can make a determination in reference to the output signal of the clutch pedal sensor 32, for example. When the control apparatus 30 determines that the state of the first clutch 20 has not been switched to the half clutch, the control apparatus 30 returns to the step S51. That is, this process is executed repeatedly until the state of the first clutch 20 is switched to the half clutch from the release state.

On the other hand, when the control apparatus 30 determines that the state of the first clutch 20 has been switched to the half clutch, the control apparatus 30 goes to the step S17, and from this step, proceeds with the processes in a similar manner to Fig. 2.

According to this start preparation routine, when the state of the first clutch 20 is switched to the half clutch from the release state, the state of the second clutch 21 is switched to the release state. As the result, it is possible to switch the state of the second clutch 21 to the release state before the first clutch 20 goes into in the fully engaged state. Thereby, since it is possible to prevent the engine 2 and the transmission 10 from connecting fully with each other when the vehicle 1 is parked, it is possible to prevent the engine stall.

The present invention is not limited to the above-described examples, and various modifications of the present invention may be provided within the scope defined by the appended claims. For example, the transmission of the vehicle to which the present invention is applied is not limited to a transmission the top gear of which is a 5th gear. The transmission may be a transmission the top gear of which is a 4th gear or less, or 6th gear or more, for example. Furthermore, the hybrid vehicle to which the present invention is applied may have an electric motor instead of the motor generator.

The source power which is used for making the vehicle start off is not limited to any one of the motor generator and the internal combustion engine. The motor generator may be controlled so as to output power while transmitting power of the internal combustion engine to the manual transmission through the second clutch. That is, the vehicle may be made to start off by using the internal combustion engine and the motor generator.

The vehicle to which the present invention is applied is not limited to the vehicle in the above description. For example, it is possible to apply the present invention to a vehicle where: a rotating member such as a rotating shaft is connected with an input shaft of a manual transmission via a manual-type clutch; a motor generator is connected with the rotating member; and an internal combustion engine is also connected with the rotating member via an automatic clutch.

## Claims

1. A start control apparatus which is applied to a hybrid vehicle (1), the hybrid vehicle including:

   a manual transmission (10) having plural shift stages where different gear ratios from each other are set respectively, the shift stages being changed from each other in response to an operation of a shift lever (13);
   a rotating member (3a) being connected with an input shaft (11) of the manual transmission via a first clutch (20) to be actuated in response to a stepping operation of a clutch pedal (CP);
   an electric motor (3) being provided so as to be allowed to transmit power to the rotating member; and
   an internal combustion engine (2) being connected with the rotating member so as to be allowed to transmit power via a second clutch (21), wherein
   the start control apparatus (30) includes a control device which controls operations of the electric motor, the internal combustion engine, and the second clutch,
   the control device makes the vehicle start off by using power of at least any one of the internal combustion engine and the electric motor when predetermined start conditions are satisfied,
   the start conditions include that: the second clutch is in a release state where power transmission between the internal combustion engine and the rotating member is shut off; the first clutch is in an engaged state where power is transmitted between the rotating member and the input shaft of the manual transmission; and an accelerator opening of the vehicle is greater than zero,
   the second clutch is a friction clutch, and
   the control device, when (S35) the vehicle is made to start off by the internal combustion engine, switches gradually the state of the second clutch from the release state, to an engaged state where power is transmitted between the internal combustion engine and the rotating member while increasing gradually output power of the internal combustion engine, after the predetermined start conditions are satisfied.

2. The start control apparatus according to claim 1, wherein
   the first clutch is a friction clutch which is allowed to switch a state of the first clutch to either: a half clutch engaged state where power is transmitted between the rotating member and the input shaft of the manual transmission while the rotating member and the input shaft of the manual transmission rotate at different rotating speed from each other; or a fully engaged state where the rotating member and the input shaft of the manual transmission rotate integrally with each other, and
the control device controls the operations of the electric motor, the internal combustion engine, and the second clutch so that a drive wheel of the vehicle is not driven by the internal combustion engine or the electric motor, when the accelerator opening of the vehicle is zero even though the first clutch is in the half clutch engaged state.

**3.** The start control apparatus according to claim 1 or 2, wherein
the control device switches a state of the second clutch to the release state, in a case that a state of the manual transmission is changed to a state of any one of the shift stages from a neutral state, when the vehicle is parked.

**4.** The start control apparatus according to claim 1 or 2, wherein
the first clutch is a friction clutch which is allowed to switch a state of the first clutch to either: a half clutch engaged state where power is transmitted between the rotating member and the input shaft of the manual transmission while the rotating member and the input shaft of the manual transmission rotate at different rotating speed from each other; or a fully engaged state where the rotating member and the input shaft of the manual transmission rotate integrally with each other, and
the control device switches a state of the second clutch to the release state, in a case that the clutch pedal is stepped on to switch a state of the first clutch to the half clutch engaged state from the fully engaged state, when the vehicle is parked.

**5.** The start control apparatus according to claim 1 or 2, wherein
the first clutch is a friction clutch which is allowed to switch a state of the first clutch to either: a half clutch engaged state where power is transmitted between the rotating member and the input shaft of the manual transmission while the rotating member and the input shaft of the manual transmission rotate at different rotating speed from each other; or a fully engaged state where the rotating member and the input shaft of the manual transmission rotate integrally with each other, and
the control device switches a state of the second clutch to the release state, in a case that the clutch pedal is operated to switch a state of the first clutch to the half clutch engaged state from a release state where power transmission between the rotating member and the input shaft of the manual transmission is shut off, when the vehicle is parked.

## Patentansprüche

**1.** Startsteuerungsvorrichtung, die auf ein Hybridfahrzeug (1) angewendet wird, wobei das Hybridfahrzeug Folgendes beinhaltet:

ein Handschaltgetriebe (10) mit mehreren Schaltstufen, wobei jeweils voneinander sich unterscheidende Übersetzungsverhältnisse eingestellt werden, wobei die Schaltstufen in Reaktion auf eine Betätigung eines Schalthebels (13) geändert werden;
ein drehendes Element (3a), das mit einer Eingangswelle (11) des Handschaltgetriebes über eine erste Kupplung (20) verbunden ist, die in Reaktion auf einen tretenden Einsatz eines Kupplungspedals (CP) zu betätigen ist;
einen elektrischen Motor (3), der so bereitgestellt ist, dass ein Übertragen von Energie an das drehende Element gestattet wird; und
einen Verbrennungsmotor (2), der mit dem drehenden Element verbunden ist, sodass gestattet wird, über eine zweite Kupplung (21) Energie zu übertragen, wobei
die Startsteuerungsvorrichtung (30) eine Steuerungseinrichtung beinhaltet, die Operationen des elektrischen Motors, des Verbrennungsmotors und der zweiten Kupplung steuert,
wobei die Steuerungseinrichtung das Fahrzeug durch Verwendung von Energie von mindestens einem von dem Verbrennungsmotor und dem elektrischen Motor starten lässt, wenn vorbestimmte Startbedingungen erfüllt sind,
wobei die Startbedingungen beinhalten, dass: sich die zweite Kupplung in einem Ausrückstatus befindet, wobei die Energieübertragung zwischen dem Verbrennungsmotor und dem drehenden Element abgeschaltet ist; die erste Kupplung in einem eingerückten Status ist, wobei Energie zwischen dem drehenden Element und der Eingangswelle des Handschaltgetriebes übertragen wird; und eine Gashebelöffnung des Fahrzeugs größer als null ist,
die zweite Kupplung eine Reibungskupplung ist, und
die Steuerungsvorrichtung dann, wenn (S35) das Fahrzeug von dem Verbrennungsmotor zum Starten gebracht wird, allmählich den Status der zweiten Kupplung von dem Ausrückstatus in einen eingerückten Status umschaltet, wobei Energie zwischen dem Verbrennungsmotor und dem drehenden Element übertragen wird, während die Ausgangsleistung des Verbrennungsmotors allmählich erhöht wird, nachdem die vorbestimmten Startbedingungen erfüllt sind.

2. Startsteuerungsvorrichtung nach Anspruch 1, wobei die erste Kupplung eine Reibungskupplung ist, der gestattet wird, einen Status der ersten Kupplung umzuschalten in entweder: einen halbeingerückten Kupplungsstatus, wobei Energie zwischen dem drehenden Element und der Eingangswelle des Handschaltgetriebes übertragen wird, während sich das drehende Element und die Eingangswelle des Handschaltgetriebes mit sich voneinander unterscheidender Drehgeschwindigkeit drehen; oder einen vollständig eingerückten Status, wobei sich das drehende Element und die Eingangswelle des Handschaltgetriebes einstückig miteinander drehen, und die Steuerungsvorrichtung die Operationen des elektrischen Motors, des Verbrennungsmotors und der zweiten Kupplung steuert, sodass ein Antriebsrad des Fahrzeugs von dem Verbrennungsmotor oder dem Elektromotor nicht angetrieben wird, wenn die Gashebelöffnung des Fahrzeugs null ist, obwohl sich die erste Kupplung in dem halbeingerückten Kupplungsstatus befindet.

3. Startsteuerungsvorrichtung nach Anspruch 1 oder 2, wobei die Steuerungsvorrichtung einen Status der zweiten Kupplung in den Ausrückstatus in einem Fall umschaltet, dass ein Status des Handschaltgetriebes von einem neutralen Status in einen Status von jeglicher einer der Schaltstufen geändert wird, wenn das Fahrzeug geparkt ist.

4. Startsteuerungsvorrichtung nach Anspruch 1 oder 2, wobei die erste Kupplung eine Reibungskupplung ist, der gestattet wird, einen Status der ersten Kupplung umzuschalten in entweder: einen halbeingerückten Kupplungsstatus, wobei Energie zwischen dem drehenden Element und der Eingangswelle des Handschaltgetriebes übertragen wird, während sich das drehende Element und die Eingangswelle des Handschaltgetriebes mit sich voneinander unterscheidender Drehgeschwindigkeit drehen; oder einen vollständig eingerückten Status, wobei sich das drehende Element und die Eingangswelle einstückig miteinander drehen, und die Steuerungsvorrichtung einen Status der zweiten Kupplung in den Ausrückstatus in einem Fall umschaltet, dass das Kupplungspedal getreten wird, um einen Status der ersten Kupplung von dem volleingerückten Status in den halbeingerückten Kupplungsstatus umzuschalten, wenn das Fahrzeug geparkt ist.

5. Startsteuerungsvorrichtung nach Anspruch 1 oder 2, wobei die erste Kupplung eine Reibungskupplung ist, der gestattet wird, einen Status der ersten Kupplung umzuschalten in entweder: einen halbeingerückten Kupplungsstatus, wobei Energie zwischen dem drehenden Element und der Eingangswelle des Handschaltgetriebes übertragen wird, während sich das drehende Element und die Eingangswelle des Handschaltgetriebes mit sich voneinander unterscheidender Drehgeschwindigkeit drehen; oder einen vollständig eingerückten Status, wobei sich das drehende Element und die Eingangswelle des Handschaltgetriebes einstückig miteinander drehen, und die Steuerungsvorrichtung einen Status der zweiten Kupplung in den Ausrückstatus in einem Fall umschaltet, dass das Kupplungspedal betätigt wird, um einen Status der ersten Kupplung von einem Ausrückstatus in den halbeingerückten Kupplungsstatus umzuschalten, wobei die Energieübertragung zwischen dem drehenden Element und der Eingangswelle des Handschaltgetriebes abgeschaltet ist, wenn das Fahrzeug geparkt ist.

**Revendications**

1. Appareil de commande de démarrage qui est appliqué à un véhicule hybride (1),
le véhicule hybride comprenant :

une boîte de vitesses manuelle (10) ayant plusieurs étages de changement de vitesse où différents rapports de vitesse sont respectivement réglés les uns par rapport aux autres, les étages de changement de vitesse étant modifiés les uns par rapport aux autres en réponse à une opération d'un levier de changement de vitesse (13) ;
un élément rotatif (3a) relié à un arbre d'entrée (11) de la boîte de vitesses manuelle par l'intermédiaire d'un premier embrayage (20) à actionner en réponse à une opération d'enfoncement d'une pédale d'embrayage (CP) ;
un moteur électrique (3) fourni de sorte à pouvoir transmettre de la puissance à l'élément rotatif ; et
un moteur à combustion interne (2) relié à l'élément rotatif de sorte à pouvoir transmettre de la puissance par l'intermédiaire d'un second embrayage (21),
l'appareil de commande de démarrage (30) comprenant un dispositif de commande qui commande les opérations du moteur électrique, du moteur à combustion interne et du second embrayage,
le dispositif de commande faisant démarrer le véhicule à l'aide de la puissance du moteur à combustion interne et/ou du moteur électrique lorsque des conditions de démarrage prédéfinies sont remplies,

les conditions de démarrage comprenant : le second embrayage étant dans un état débrayé dans lequel la transmission de puissance entre le moteur à combustion interne et l'élément rotatif est arrêtée ; le premier embrayage est dans un état débrayé dans lequel la puissance est transmise entre l'élément rotatif et l'arbre d'entrée de la boîte de vitesses manuelle ; et une ouverture d'accélérateur du véhicule est supérieure à zéro,

le second embrayage étant un embrayage à friction, et

le dispositif de commande, lorsque (S35) le véhicule est démarré par le moteur à combustion interne, faisant passer progressivement l'état du second embrayage de l'état débrayé à un état embrayé dans lequel la puissance est transmise entre le moteur à combustion interne et l'élément rotatif tout en augmentant progressivement la puissance de sortie du moteur à combustion interne, une fois les conditions de démarrage prédéfinies remplies.

2. Appareil de commande de démarrage selon la revendication 1,

le premier embrayage étant un embrayage à friction qui peut faire passer un état du premier embrayage à soit : un état à demi embrayé dans lequel la puissance est transmise entre l'élément rotatif et l'arbre d'entrée de la boîte de vitesses manuelle tandis que l'élément rotatif et l'arbre d'entrée de la boîte de vitesses manuelle tournent à différentes vitesses de rotation l'un de l'autre ; soit un état entièrement embrayé dans lequel l'élément rotatif et l'arbre d'entrée de la boîte de vitesses manuelle tournent intégralement l'un avec l'autre, et

le dispositif de commande commandant les opérations du moteur électrique, du moteur à combustion interne et du second embrayage de sorte qu'une roue motrice du véhicule ne soit pas entraînée par le moteur à combustion interne ou le moteur électrique, lorsque l'ouverture d'accélérateur du véhicule est nulle même si le premier embrayage est à l'état à demi embrayé.

3. Appareil de commande de démarrage selon la revendication 1 ou 2,

l'appareil de commande faisant passer un état du second embrayage à l'état débrayé, dans le cas où un état de la boîte de vitesses manuelle est passé à un état de l'un quelconque des étages de changement de vitesse à partir d'un état neutre, lorsque le véhicule est stationné.

4. Appareil de commande de démarrage selon la revendication 1 ou 2,

le premier embrayage étant un embrayage à friction qui peut faire passer un état du premier embrayage à soit : un état à demi embrayé dans lequel la puissance est transmise entre l'élément rotatif et l'arbre d'entrée de la boîte de vitesses manuelle tandis que l'élément rotatif et l'arbre d'entrée de la boîte de vitesses manuelle tournent à différentes vitesses de rotation l'un de l'autre ; soit un état entièrement embrayé dans lequel l'élément rotatif et l'arbre d'entrée de la boîte de vitesses manuelle tournent intégralement l'un avec l'autre, et

le dispositif de commande faisant passer un état du second embrayage à l'état débrayé, dans le cas où la pédale d'embrayage est enfoncée pour faire passer un état du premier embrayage à l'état à demi embrayé à partir de l'état complètement embrayé, lorsque le véhicule est stationné.

5. Appareil de commande de démarrage selon la revendication 1 ou 2,

le premier embrayage étant un embrayage à friction qui peut faire passer un état du premier embrayage à soit : un état à demi embrayé dans lequel la puissance est transmise entre l'élément rotatif et l'arbre d'entrée de la boîte de vitesses manuelle tandis que l'élément rotatif et l'arbre d'entrée de la boîte de vitesses manuelle tournent à différentes vitesses de rotation l'un de l'autre ; soit un état complètement embrayé dans lequel l'élément rotatif et l'arbre d'entrée de la boîte de vitesses manuelle tournent intégralement l'un avec l'autre, et

le dispositif de commande faisant passer un état du second embrayage à l'état débrayé, dans le cas où la pédale d'embrayage est actionnée pour faire passer un état du premier embrayage à l'état à demi embrayé à partir d'un état débrayé dans lequel la transmission de puissance entre l'élément rotatif et l'arbre d'entrée de la boîte de vitesses manuelle est arrêtée, lorsque le véhicule est stationné.

# FIG.1

VEHICLE SPEED SENSOR

ACCELERATOR OPENING SENSOR

CONTROL APPARATUS

EP 2 818 375 B1

# FIG.2

```
                    ( Start Preparation )
                             │
                             ▼
        S11 │ Obtain Vehicle State │
                             │
                             ▼
        S12 ⟨ Preparation Flag is "ON" ? ⟩──Yes──┐
                             │                     │
                             │ No                  ▼
                             ▼              S22
        S13 ⟨ Transmission is ⟩──No──┐    │ Keep              │
            ⟨ in Neutral State ? ⟩   │    │ Start Preparation State │
                             │       │
                             │ Yes   │
                             ▼       │
        S14 ⟨ First Clutch is ⟩──No──┤
            ⟨ in Release State ? ⟩   │
                             │       │
                             │ Yes   │
                             ▼       │
        S15 ⟨ Vehicle Speed ≦ ⟩──No──┤
            ⟨ Determination Speed ? ⟩│
                             │       │
                             │ Yes   │
                             ▼       │
        S16 ⟨ Transmission is ⟩──Yes─┘
            ⟨ in Neutral State ? ⟩
                             │
                             │ No
                             ▼
        S17 ⟨ Engine is Running ? ⟩──No──┐
                             │           │
        S18 │ Yes            │      S21  ▼
            │ Switch Second Clutch │  │ Switch Second Clutch │
            │ to Release State     │  │ to Release State     │
                             │           │
                             ▼           │
        S19 │ Execute              │      │
            │ Start Preparation Control │  │
                             │           │
                             ▼           │
        S20 │ Set Preparation Flag "ON" │ │
                             │           │
                             ▼◄──────────┘
                    ( Return )
```

FIG.3

```
                    ┌──────────────────┐
                    │  Start Control   │
                    └──────────────────┘
       S11                   │
              ┌──────────────────────────┐
              │   Obtain Vehicle State   │
              └──────────────────────────┘
       S12                   │
              ╱─────────────────────────╲        No
              ╲  Preparation Flag is "ON" ? ╲──────────────────┐
               ╲───────────────────────────╱                   │
                          │ Yes                                 │
       S31                 ▼                                     │
            ╱────────────────────────╲                          │
            │       First Clutch is    │       No               │
            │  in Fully Engaged State  ├──────────────────┐     │
            │      or Half Clutch ?    │                  │     │
            ╲────────────────────────╱                    │     │
                          │ Yes                            │     │
       S32                ▼                                │     │
            ╱─────────────────────────────╲     No        │     │
            ╲   Accelerator Opening > 0 ?   ╲───────┐      │     │
             ╲───────────────────────────╱         │      │     │
                          │ Yes                     │      │     │
       S33                ▼                         │      │     │
            ◇─────────────────────────◇    Yes     │      │     │
            ◇    Engine is Running ?    ◇───────┐   │      │     │
            ◇─────────────────────────◇        │   │      │     │
                          │ No                  │   │      │     │
       S34                ▼           S22       │   ▼      │     │
        ┌──────────────────┐    ┌─────────────────────────┐│     │
        │     Execute       │    │          Keep            ││     │
        │  MG Start Control │    │  Start Preparation State ││     │
        └──────────────────┘    └─────────────────────────┘│     │
                  │        S35        │                     │     │
                  │   ┌──────────────────┐                  │     │
                  │   │     Execute       │◄─────────────────┘     │
                  │   │ Engine Start Control │                     │
                  │   └──────────────────┘                         │
                  │◄──────────┘                                    │
       S36        ▼                                                │
        ┌──────────────────────────┐                              │
        │ Set Preparation Flag "OFF" │                            │
        └──────────────────────────┘                              │
                  │◄──────────────────────────────────────────────┘
                  ▼
            ┌──────────────┐
            │    Return    │
            └──────────────┘
```

# FIG.4

```
                    ( Start Preparation )
                             │
        S11    │ Obtain Vehicle State │
                             │
   S12   ╱                        ╲    Yes
   ╱  Preparation Flag is "ON" ?   ╲───────────┐
   ╲                              ╱            │
        │ No                              S22  ▼
   S13  ▼                           ┌──────────────────────┐
   ╱ Transmission is ╲     No       │        Keep          │
  ╱   in Neutral State ? ╲──────┐   │ Start Preparation State│
  ╲                     ╱       │   └──────────────────────┘
        │ Yes                   │           │
   S15  ▼                       │           │
   ╱ Vehicle Speed ≦  ╲    No    │           │
  ╱  Determination Speed ? ╲─────┼───────────┤
  ╲                       ╱      │           │
        │ Yes                    │           │
   S41  ▼◄──────────────────┐    │           │
   ╱ First Clutch      ╲     │    │           │
  ╱  Fully Engaged State ╲   │ No │           │
  ╲    → Half Clutch ?  ╱────┘    │           │
        │ Yes                     │           │
   S17  ▼                         │           │
   ╱ Engine is Running ? ╲   No    │           │
  ╱                       ╲───────┐│           │
  ╲                       ╱       ││           │
        │ Yes            S21      ▼│           │
   S18  ▼               ┌───────────────────┐ │
  ┌───────────────────┐ │ Switch Second Clutch│ │
  │ Switch Second Clutch│ │  to Release State  │ │
  │  to Release State  │ └───────────────────┘ │
  └───────────────────┘          │            │
        │                        │            │
   S19  ▼                        │            │
  ┌───────────────────┐          │            │
  │      Execute      │          │            │
  │ Start Preparation Control │  │            │
  └───────────────────┘          │            │
        │◄─────────────────┐─────┘            │
   S16  ▼                  │                   │
  Yes  ╱ Transmission is ╲ │                   │
  ┌───╱  in Neutral State ? ╲                  │
      ╲                    ╱                   │
        │ No                                   │
   S20 │ Set Preparation Flag "ON" │           │
        │◄────────────────────────────────────┘
        ▼
     ( Return )
```

# FIG.5

```
        ( Start Preparation )
                    │
S11    │ Obtain Vehicle State │
                    │
S12  < Preparation Flag is "ON" ? >──── Yes ──────┐
                    │                              │
                    No                       S22   ▼
                    │              ┌──────────────────────────┐
S14  < First Clutch is  >── No     │           Keep            │
     < in Release State ? >   │    │  Start Preparation State  │
                    │         │    └──────────────────────────┘
                    Yes       │                    │
                    │         │                    │
S13  < Transmission is >── Yes ──────────────────►
     < in Neutral State ? >   │
                    │
                    No
                    │
S15  < Vehicle Speed ≦    >── No ──────────────────►
     < Determination Speed ? >
                    │
                    Yes
S51             │◄─────────────┐
    ┌─────────────────────┐    │
    │    First Clutch      │    │
    <    Release State     >── No
    │   → Half Clutch ?    │
    └─────────────────────┘
                    │
                    Yes
S17             │
        < Engine is Running ? >──── No ────────┐
                    │                           │
S18             Yes                    S21      ▼
    ┌──────────────────────┐    ┌──────────────────────┐
    │ Switch Second Clutch │    │ Switch Second Clutch │
    │   to Release State   │    │   to Release State   │
    └──────────────────────┘    └──────────────────────┘
                    │                           │
    ┌──────────────────────┐                   │
    │      Execute         │                   │
S19 │ Start Preparation Control │              │
    └──────────────────────┘                   │
                    │◄─────────────────────────┘
S20  │ Set Preparation Flag "ON" │
                    │
              ( Return )
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011183847 A
- JP 2011037409 A
- JP 2001352605 A
- US 6116363 A